Europäisches Patentamt

European Patent Office

Office européen des brevets

(11) Publication number: **0 087 300**
**B1**

# EUROPEAN PATENT SPECIFICATION

(45) Date of publication of patent specification: 03.05.89

(51) Int. Cl.⁴: **G 11 B 21/08**, F 16 C 31/04 //
G11B5/55

(21) Application number: 83300875.8

(22) Date of filing: 21.02.83

(54) **Rotary head-positioning actuator for a disc data store.**

(30) Priority: 23.02.82 GB 8205293

(43) Date of publication of application:
31.08.83 Bulletin 83/35

(45) Publication of the grant of the patent:
03.05.89 Bulletin 89/18

(84) Designated Contracting States:
BE DE FR GB IT NL

(56) References cited:
DE-A-2 247 946
FR-A-1 464 889
GB-A-1 372 402
US-A-1 622 880
US-A-2 819 127
US-A-3 372 962

(73) Proprietor: UNISYS CORPORATION
1, Burroughs Place
Detroit Michigan 48232 (US)

(72) Inventor: Donkin, Charles William
Millbank Mill Wynd Falkland
Fife Scotland (GB)

(74) Representative: Kirby, Harold Douglas Benson
et al
G.F. Redfern & Company Marlborough Lodge 14
Farncombe Road
Worthing West Sussex BN11 2BT (GB)

Courier Press, Leamington Spa, England.

## Description

The present invention relates to disc drive wherein a rotatable shaft is supported by a composite bearing asembly allowing both rotation of the shaft and axial movement of the shaft.

United States Patent 2 819 127 discloses a grinding machine (or similar apparatus) wherein a unidirectionally rotating shaft is supported between two bearing assemblies, one of the bearing assemblies being a composite bearing assembly capable of allowing both rotation of the shaft by means of a rotary bearing and axial movement of the shaft by means of an axial bearing which supports the radial bearing. The composite bearing assembly is not capable of maintaining integrity (i.e. is likely to disintegrate) when outside of the machine. Axial force-determining means are provided in the form of springs and oversize balls whereby the force required to cause axial movement is present. The balls are free, if urged, to move in a circumferential direction about the shaft axis.

United States Patent 3 372 962 discloses a disc drive in which the unidirectionally rotating spindle upon which the rotating disc is mounted has, at its lower end, a bearing allowing both rotation of the shaft and axial movement of the shaft. The bearing comprises a single outer ring having circumferential grooves which support balls which are free to rotate about and slide up and down in a cylindrical sleeve on the shaft. The bearing employs the same balls to allow both axial and rotary movement and thereby fails to provide means both for preventing rotation of an axial bearing and for setting the force at which axial shaft movement will occur to a predetermined axial limit.

United Kingdom Patent 1 372 402 discloses a ball spline wherein a single bearing with axial recesses is capable of allowing play in axial direction between inner and outer annular member. The bearing element disclosed is not a composite bearing in that it shows only one set of balls and only mutual axial movement is possible between the bearing elements. Although the balls are provided in axial recesses no means are provided for setting the force at which axial movement will commence to a predetermined limit. Pre-loading of the balls is accomplished only by springs.

According to the present invention there is provided a disc drive wherein a rotatable shaft is supported by a bearing allowing both rotation of said shaft and axial movement of said shaft, said disc drive being characterized by said shaft being the shaft of a rotary actuator for positioning heads over a rotating disc; by said bearing being a composite bearing assembly comprising an axial bearing assembly and a radial bearing assembly in mutual engagement; by said radial bearing assembly comprising a plurality of bearing elements between an outer radial ring and an inner radial ring to allow free rotation of said outer radial ring with respect to said inner radial ring; by said axial bearing assembly having a plurality of balls between an inner axial ring and an outer axial ring; by said inner axial ring comprising a plurality of V-shaped axially extensive recesses on a face thereof proximate to said outer axial ring; by said outer axial ring comprising a plurality of V-shaped axially extensive recesses on a face therof proximate to said inner axial ring; by said axially extensive V-shaped recesses on said outer axial ring being co-operative with each of said axially extensive V-shaped recesses on said inner axial ring to hold at least one out of said plurality of balls there-between; and by said plurality of balls being outsize balls co-operative with said recesses both to prevent rotation of said outer axial ring with respect to said inner axial ring and to deform the recesses to exert a force in opposition to relative axial movement between said inner and outer axial rings less than or equal to a predetermined axial limit thereby to limit the rotational friction experienced by said radial bearing assembly caused by axial strain on said composite bearing assembly to below a predetermined radial limit.

Head positioning actuators in Winchester style disc drives rotate about the axis of a shaft to position one or more data recording or data recovering heads at selectable radii on rotating data storage discs.

A Winchester style disc drive comprises a base whereon one or more discs ar restrained to rotate on a spindle and whereon a rotary actuator is mounted, the actuator comprising a head mounting arm rotatable about an axis to position a head or heads for data storage or recovery at selectable radii on the disc or discs.

The rotary actuator in general comprises a yoke having bearings mounted into the opposite faces thereof for the rotation of a shaft passing therethrough, the head arm being keyed to or integral with the shaft. It is general that the shaft is an interference fit in the bearing and the bearing is an interference fit within its particular face of the yoke.

During assembly of the yoke and shaft with the bearings, because of the frictional, transition fit of the various parts it is difficult to control the residual force directed along the axis of the shaft as the bearing load. Similarly, when the assembly is subjected to change in temperature, the relative expansion and contraction between the shaft and the yoke can set up very large bearing loads. As bearing loads increase, so the amount of torque required to turn the shaft about its axis becomes greater. In the case of the rotary actuator in a Winchester disc drive, the increasing torque is reflected in an increasing positioning error for the heads as the friction encountered by the head positioning servomechanism of which the actuator forms part rises. When the friction exceeds a critical limit the head position error induces data corruption so that recorded data cannot be recovered or new data is written unwantedly and destructively in the position of data it was desired to retain. The difficulty in controlling residual bearing loads makes it difficult to predict when an assembly is liable to exceed the critical limit and it is perfectly and distressingly possible to manufacture an assembly which passes all tests only to fail after delivery to a customer.

The bearings for the actuator shaft must be precise. There are many hundreds of data storage tracks per radial centimeter on the disc of a Winchester drive, and the accuracy of positioning must be such that the head or heads can be positioned to intercept a selectable one of them. The amount of play in the bearings is correspondingly small and preferably zero, making the takeup of stress or thermally induced dimensional changes by residual play an impractical proposition. It is not possible to deliberately make the transition fits of poor frictional quality, since this would allow the shaft to slip during shipping or working life of the drive and render the actuator inoperable. As an added disadvantage, the precision of the dimensions required to provide a transition fit of controlled friction is such as to render cost prohibitive.

It is therefore desirable to provide a method and apparatus for the mounting of a shaft between two bearings in a yoke where the shaft is free to rotate about an axis with less than a predetermined amount of frictional torque despite thermal expansion assembly tolerances and with substantially no play in a transverse or longitudinal direction relatively to said axis.

In a preferred embodiment an actuator for positioning a plurality of preferably magnetic data recording and/or recovering heads radially over one or more discs in a disc data store comprises a head support arm on a shaft constrained within a yoke by a composite float bearing and a rotary bearing set into first and second faces of said yoke respectively. The rotary bearing is preferably affixed to the shaft so that the shaft cannot move with respect thereto and the rotary bearing is preferably affixed in the second face of said yoke so as to be immovable with respect thereto, thereby positively locating the shaft with respect to the second face of the yoke.

The composite bearing preferably permits rotation of the shaft about its axis together with movement of the shaft in the direction of the axis. Movement of the shaft in the direction of the axis preferably occurs if and only if a predetermined axial force is exceeded.

The rotary bearing is preferably a ball or roller bearing.

The composite bearing preferably comprises a composite bearing and a composite axial bearing mutually co-operative for the movement of the shaft. The composite rotary and axial bearings are preferably mutually supportive for coupling said shaft to the first face of the yoke. The axial bearing is preferably affixed to the first face of the yoke and the composite rotary bearing is preferably concentrically affixed to the shaft, the axial bearing preferably being affixed to the composite rotary bearing for its support.

The axial bearing is preferably a rolling bearing, in which case it is preferably circular and preferably comprises an outer ring for attachement to the first face of said yoke, an inner ring for attachment to the outer perimeter of the composite rotary bearing, and a plurality of rolling balls interposed therebetween. The balls have an uncompressed diameter a little greater than the space allotted to them between said inner and outer rings to generate a force by mutual compression tending to maintain the inner and outer rings immobile relatively to one another unless a predetermined axial force is exceeded.

The outer ring preferably comprises an outer ring lip extensive towards said balls and the inner ring preferably comprises an inner ring lip also extensive towards said balls such that movement between said inner and outer rings is restrained from exceeding a predetermined limit by said lips trapping one or more of said balls therebetween.

Said lips can be formed, in one variation of the preferred embodiment, by the inclusion of first and second spring clips in the construction of the axial bearing, the first spring clip expanding outwards to the first face of the yoke and overhanging the space between the rings, and the second spring clip contracting onto the outer perimeter of the composite rotary bearing and also overhanging the space between the rings, but on the opposite end of the axial bearing, the variation also preferably including the use of third and fourth spring clips in the same manner as the use of the first and second spring clips respectively for forming an effective second set of lips for restraining movement of the inner relative to the outer ring beyond a second limit.

In the preferred embodiment, the balls are set into recesses in the inner or the outer rings or both. The recesses themselves can comprise a limit for restraining the excusion of the balls therebeyond.

The plurality of balls preferably comprises three or more balls.

The instant invention is further explained, by way of an example, by the following description together with the appended drawings, in which;

Figure 1 is an isometric view of an actuator for a disc drive employing the present invention.

Figure 2 is a cross-sectional view of the actuator of figure 1 including the motive elements thereof.

Figure 3 is an isometric view of a composite bearing of the general type used in the preferred embodiment of the present invention but omitting, for simplicity, details of the recesses.

Figure 4 is a plan cross-sectional view of the composite bearing of figure 3.

Figure 5 is an axially transverse cross-sectional view of the composite bearing of Figures 3 and 4.

Figure 6 illustrates how recesses are used in the preferred embodiment to locate the balls between the inner and outer rings of the axial bearing.

Figure 7 further illustrate the recesses of Figure 6 and illustrates the use of spring clips for defining excursion limits for the inner and outer rings.

Figure 8 illustrates a truncated recess for defining an excursion limit.

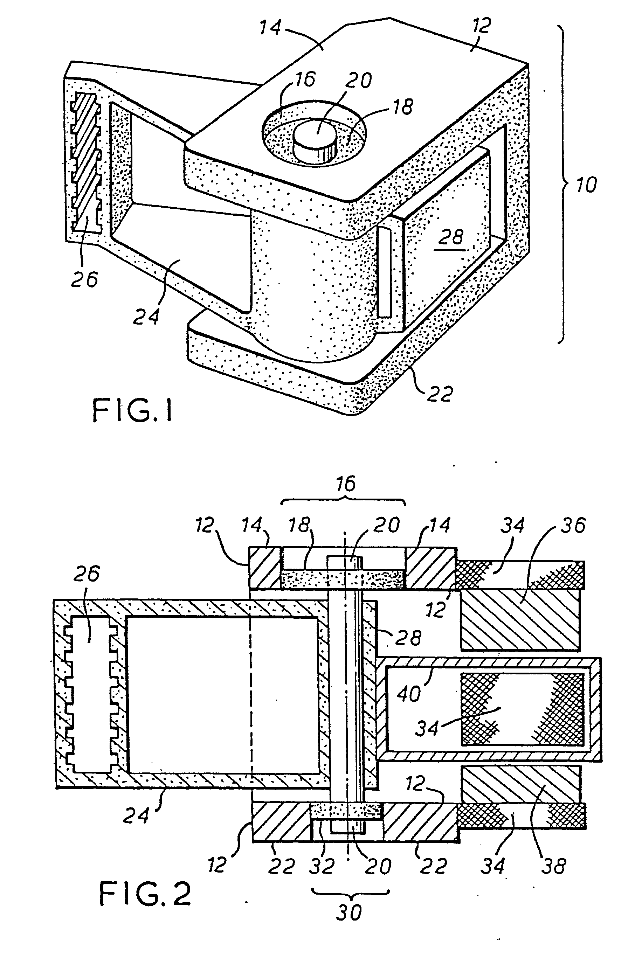

Figure 1 shows an actuator assembly 10 for positioning read/write magnetic heads in a Winchester style disc drive.

The assembly 10 comprises a yoke 12. The top face 14 of the yoke 12 has a circular aperture 16 cut therein and a composite bearing 18 set therein. The composite bearing 18 supports a shaft 20 in a manner to be described. The bottom face 22 of the yoke 12 is affixed to the base of the disc drive (not shown), which base also supports a spindle whereon a plurality of magnetic data storage discs are rotated. The bottom face 22 supports a further bearing as will be described.

A head arm structure 24 is pivoted on the shaft 20 for radially positioning a plurality of read/write heads over the discs, the heads being held in a head-mounting bracket 26 at the distal end of the arm 24. The arm assembly 24 also includes a mounting face 28 for receiving the magnetic actuator which drives the arm assembly 24.

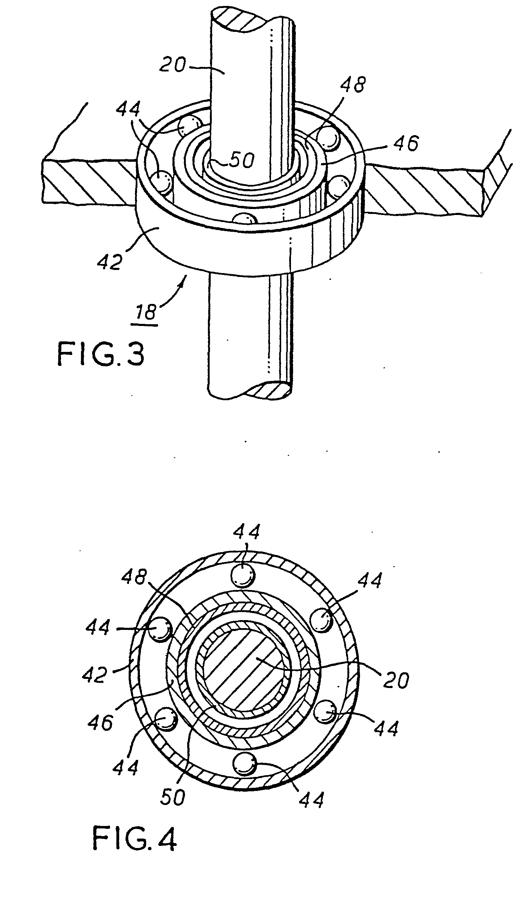

Figure 2 shows a cross-sectional view of the actuator assembly 10 of Figure 1 and further shows the motive elements associated therewith.

The lower face 22 of the yoke 12 comprises a lower circular aperture 30 wherein a rotary bearing 32 is transition fitted and wherein the shaft 20 is transition fitted such that the rotary bearing 32, which can be any ball or roller bearing known in the art, allows the shaft 20 to rotate about its axis but does not allow movement by the shaft 20 in the direction of the axis relatively to the lower face 22.

A three-prong magnetic yoke 34 is affixed to the rear of the main yoke 12 to provide a magnetic circuit for the flux from first and second magnets 36 38 for concentration of the flux in the gaps therebetween, wherein a coil assembly 40, affixed to the rear face 28 of the arm 24, is free to move and to exert a turning torque on the arm 24 in response to externally supplied electric current.

The actuator assembly 10 forms part of a head positioning servomechanism, the feedback signals for the servomechanism being derived from an associated transducer affixed to rotate with the arm 24 or from servo signals recorded on the disc or discs and recovered and decoded by interception via one or more of the heads.

Figure 3 shows an isometric view of a composite bearing 18 of the type illustrated in Figures 1 and 2.

The composite bearing 18 is interference fitted into the circular opening 16 in the top face 14 of the yoke 12. The composite bearing 18 comprises an outer axial ring 42 for the transition fitting with the top face 14 as described. A plurality of balls, preferably steel or some other durable and resilient material 44, lie between the outer axial ring 42 and an inner axial ring 46. The inner axial ring 46 is free to move in the direction of the axis of the shaft 20 relatively to the outer axial ring 44 under the action of the balls 44 rolling therebetween.

The balls 44 are slightly outsize, so that their diameter is slightly greater than the clearance they are provided with between the outer axial ring 42 and the inner axial ring 46. When the balls 44 are inserted between the rings 42 46 the material of the balls 44 and of the rings 42 46 is subjected to mechanical stress which provides elastic reaction forces preventing the movement of the inner axial ring 46 relatively to the outer axial ring 42 until a predetermined force in the direction of the axis of the shaft 20 has been exceeded. As will later be described recesses or grooves are provided to accommodate the balls 44.

The inner axial ring is interference fitted onto the outer race 48 of a roller or ball bearing rotary bearing. An inner race 50 is interference fitted onto the shaft 20 and roller or ball bearings supplied in a manner well known in the art between the inner and outer races 50, 48 to provide a bearing for the rotation of the shaft 20 about its axis.

Figure 4 shows a plan cross-sectional view of the composite bearing 18 of Figures 1 to 3. While there are a total of 6 balls shown in Figure 4 it is to be appreciated that any system with three or more balls equispaced around the shaft 20 works according to the present invention. The balls 44 can be constrained within a cage as is normal in the design of ball bearing assemblies. Figure 4 should be considered together with the description associated with Figure 3 given above.

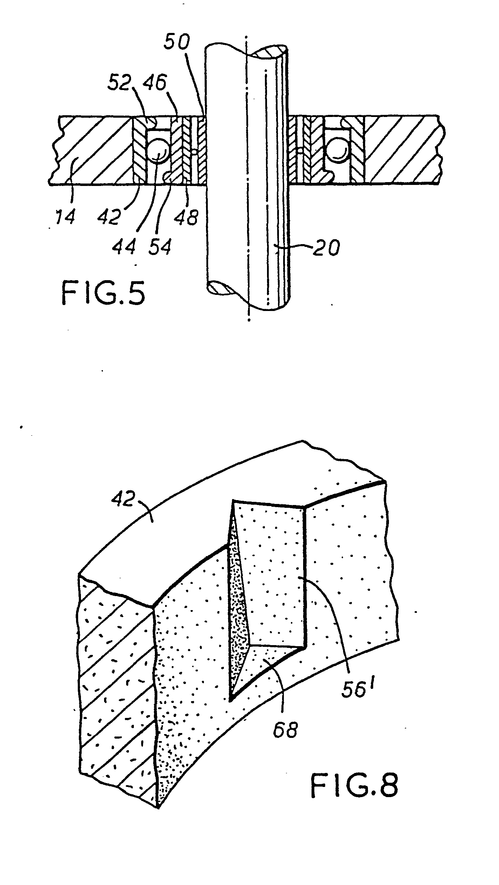

Figure 5 shows a transverse axial cross-sectional view of the composite bearing assembly 18 also shown in Figures 1, 2, 3 and 4.

In addition to the elements already described, Figure 5 shows an outer lip 52 on the outer side of the yoke 12 affixed to the outer axial ring 42 to overhang the balls 44. An inner lip 54 is affixed on the inner side of the yoke 12 to the inner axial ring 46 also to overhang the balls 44. Should excessive axial movement occur, the outer lip 52 will engage the top of the balls 44, the inner lip 54 will engage the bottom of the balls 44, and the trapping of the balls 44 between the two 52 54 prevent more than a predetermined amount of relative movement. Later description shows how the lips (52, 54) can be made from spring clips.

Those skilled in the art will readily appreciate that whereas the outer axial ring 46 is described as being interference fitted in the top face 14 of the yoke 12, it can be affixed thereto in any other manner known in the art, inclusively of glue, restraining cover plates and the machining of the outer axial ring 42 as an integral part of the top face 14 of the yoke 12.

It will also be appreciated that whereas the inner axial ring 46 is shown and described as being interference fitted on the outer race 48 it can be affixed thereto in any manner known in the art. Similarly the attachment of the inner race 50 to the shaft 20 can be in any known manner, inclusively of machining the inner race 50 as an integral part of the shaft 20.

The description of the composite bearing 18 and the drawings thereof have indicated that the axially mobile portion thereof 42 44 46 is interposed supportively between the top face 14 of the yoke 12 and the rotationally mobile portions 48 50. Those skilled in the art will appreciate how, with small modification to the description and drawings, the rotary portion 48 50 can be made to engage the upper face 14 of the yoke 12 and the axially mobile portion 42 44 can be made to engage the shaft 20.

Whereas the balls 44 have been shown angularly equispaced about the axis of the shaft 20, it will be appreciated that many variants of the present invention can be created wherein the balls 44 are not so equispaced.

As the shaft 20 and the yoke 12 mutually expand and contract, the expansion, which, in the prior art would have been accompanied by excessive bearing loads leading to undue rotation-opposing friction, is dissipated in movement between the inner and outer axial rings 46 42 whenever the axial force exceeds the predetermined limit set down by the tight fit of the balls 44 between the rings 46 42. The control of the axial force leads to control of the rotation opposing torque and consquent limitation of that torque to below a predetermined limit.

The tight fit of the balls 44 between the rings 42 46 means that the rotation of the shaft 20 is entirely accomodated by the rotary portion 48 50 of the composite bearing 18 whose friction is much less. The non-rotation of the axial portion 42 44 46 minimises wear therein and ensures stability of its friction parameter.

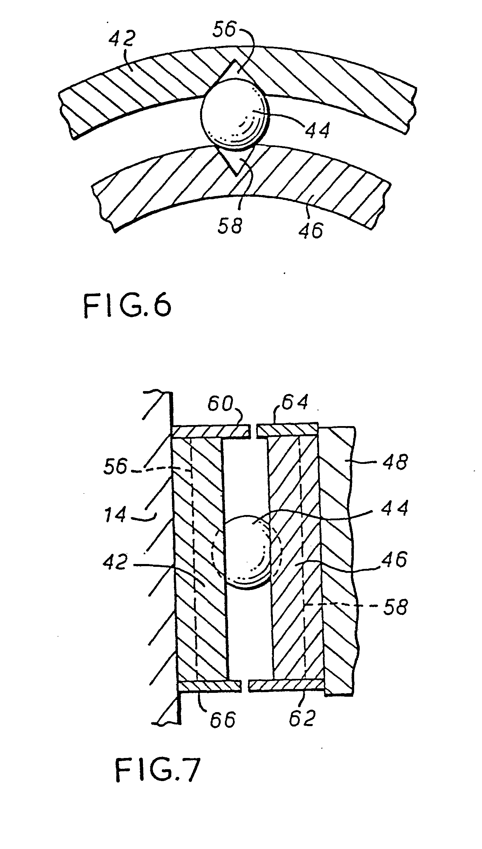

Figure 6 shows the inclusion of recesses as provided in the preferred embodiment of the invention.

A first recess 56 is set into the inside face of the outer axial ring 42. A second recess 58 is set into the inside face of the inner axial ring 46. The first and second recesses 56 58 are angularly aligned about the shaft 20 so that an outsize ball 44 can rest simultaneously in both recesses 56 58. The presence of the ball 44 in both recesses 56 58 prevents mutual rotation of the inner and outer axial rings 46 42 and the selection of the internal profile of the recesses 56 58 allows for selection of the magnitude of the force separating the inner and outer rings 46 42 from elastic deformation thereof.

Those skilled in the art will appreciate that the separation force controlling aspect of the recesses 56 58 can be achieved using a recess in only one of the inner or outer axial rings 46, 42. It will also be appeciated that schemes using mutually interactive sets of vanes and lugs on the inner and outer axial rings 46, 42 can be used to inhibit mutual rotation therebetween by their engagement in the event of excessive mutual rotation.

Figure 7 shows a further variation over the preferred embodiment as so far described.

The upper lip 52 of Figure 5 is replaced by an expanding spring clip 60 such as a "CIRCLIP" (T.M.) which expands within the aperture 16 in the top face 14 of the yoke 12 to be restrained thereby and to provide an overhang into the space between the outer and inner axial rings 42 46. The lower lip 54 of Figure 5 is replaced by a contractile, circular spring clip 62 which contracts onto the outer race and also provides an overhang into the space between the inner and outer axial rings 46 42. The substitute lips so formed operate in the same manner as the lips 52 54 of Figure 5. A second expanding spring clip 66 is incorporated onto the other end of the outer axial ring 42 to the first expanding spring clip 60, in the same manner as the first expanding spring clip 60. A second contractile spring clip 64 is incorporated onto the opposite end of the inner axial ring 46 from the first contractile spring clip 62 and in the same manner as the first contractile spring clip 62. The second expanding spring clip 66 and the second contractile spring clip 64 co-operate in the same manner as the first expanding spring clip 60 and the first contractile spring clip 62 but in the opposite direction to define a second limit of mutual movement between the inner and outer axial rings 46 42.

Those skilled in the art will readily appreciate that a set of spring clips as dsscribed 60 62 or 66, 64 can be used in co-operation with the lips 52 54 of Figure 5 or can be used to substitute one or other of the lips 52 54. The spring clips 60 62 64 66 can also be employed as part of the mechanical assembly of the composite bearing 18 to provide some or all of the force required to attach the outer axial ring 42 to the upper face 14 of the yoke 12 and to attach the outer race 48 to the inner axial ring 46.

Figure 8 shows a variation over the recesses 56, 58 of Figures 6 and 7 so far described and shows a variation over the movement restraints 52 54 60, 62, 64, 66.

Instead of extending for the whole depth of the outer axial ring 42 a modified recess 56' extends only part of the way terminating in a lower face 68. The ball 44 cannot pass the lower face and the lower face 68 therefore acts as a first part of a movement restraint for restricting the mutual movement between the inner and outer axial rings 46 42. The lower surface 68 can be used in conjunction with a lip 52 54 or a spring clip 60 62 64 66 to complete the movement restraint. The recess 56' is shown only in the outer axial ring 42. It is to be appreciated that a modified recess can equally be incorporated into the inner axial ring 46. A pair of recesses in the inner and outer rings 46 42 respectively can be opposed so that their lower surfaces 68 come together to trap the ball 44 therebetween.

## Claims

1. A disc drive wherein a rotatable shaft (20) is supported by a bearing (18) allowing both rotation of said shaft (20) and axial movement of said shaft (20), said disc drive being characterized by said shaft (20) being the shaft of a rotary actuator (10) for positioning heads over a rotating disc; by said bearing (18) being a composite bearing assembly comprising an axial bearing asembly (42, 44, 46) and a radial bearing assembly (48, 50) in mutual engagement; by said radial bearing assembly comprising a plurality of bearing elements between an outer radial ring (48) and an inner radial ring (50) to allow free rotation of said outer radial ring (48) with respect to said inner radial ring (50); by said axial bearing assembly (42, 44, 46) having a plurality of balls (44) between an inner axial ring (46) and an outer axial ring (42); by said inner axial ring (46) comprising a plurality of V-shaped axially extensive recesses (58) on a face thereof proximate to said outer axial ring (42); by said outer axial ring (42) comprising a plurality of V-shaped axially extensive recesses (56) on a face thereof proximate to said inner axial ring (46); by said axially extensive V-shaped recesses (56) on said outer axial ring (42) being co-operative with each of said axially extensive V-shaped recesses (58) on said inner axial ring (46) to hold at least one out of said plurality of balls (44) there-between and by said plurality of balls (44) being outsize balls co-operative with said recesses (56, 58) both to prevent rotation of said outer axial ring (42) with respect to said inner axial ring (46) and to deform the recesses (56, 58) to exert a force in opposition to relative axial movement between said inner (46) and outer (42) axial rings less than or equal to a predetermined axial limit thereby to limit the rotational friction experienced by said radial bearing assembly (48, 50) caused by axial strain on said composite bearing assembly (18) to below a predetermined radial limit.

2. A disc drive according to Claim 1 wherein said inner axial ring (46) and said outer axial ring (42) comprise stops co-operative to trap said balls (44) there-between to limit axial movement between said inner axial ring (46) and said outer axial ring (42) to within a first predetermined limit of relative axial travel in a first direction and a second predetermined limit of axial travel in a second direction opposite to said first direction; and wherein at least one of said stops comprises an end wall (68) in at least one of said V-shaped axially extensive recesses (56 58 57').

3. A disc drive according to Claim 1 or Claim 2 wherein said outer axial ring (42) is integrally formed with said inner radial ring (50).

4. A disc drive according to Claim 1 or Claim 2 wherein said inner axial ring (46) is integrally formed with said outer radial ring (48).

## Patentansprüche

1. Plattenantrieb,
bei dem eine drehbare Welle (20) durch ein Lager (18) gelagert ist, das sowohl eine Rotation als auch eine Axialbewegung der Welle (20) zuläßt;
dadurch gekennzeichnet, daß die Welle (20) die Welle eines rotierenden Betätigungsgliedes (10) zum Positionieren von Köpfen über einer rotierenden Platte ist;
daß das Lager (18) eine zusammengesetzte Lageranordnung mit einer Axiallageranordnung (42, 44, 46) und einer Radiallageranordnung (48, 50) ist, die im gegenseitigen Eingriff stehen;

daß die Radiallageranordnung eine Mehrzahl von Lagerelementen zwischen einem äußeren Radialring (48) und einem inneren Radialring (50) enthält, die eine freie Rotation des äußeren Radialringes (48) gegenüber dem inneren Radialring ermöglichen;
daß die Axiallageranordnung (42, 44, 46) eine Mehrzahl von Kugeln (44) zwischen einem inneren Axialring (46) und einem äußeren Axialring (42) aufweisen;
daß der innere Axialring (46) auf einer zum äußeren
Axialring (42) zeigenden Fläche eine Mehrzahl von V-förmigen, sich axial erstreckenden Aussparungen (58) aufweist;
daß der äußere Axialring (42) auf einer zum inneren Axialring (46) zeigenden Fläche eine Mehrzahl von V-förmigen, sich axial erstreckenden Aussparungen (56) aufweist;
daß die sich axial erstreckenden V-förmigen Aussparungen (56) des äußeren Axialringes (42) mit jedem der sich axial erstreckenden V-förmigen Aussparungen (58) des inneren Axialringes (46) zusammenwirken, um mindestens eine aus der Mehrzahl von Kugeln (44) dazwichen zu lagern; und
daß diese Mehrzahl von Kugeln (44) eine Übergröße haben und mit den Aussparungen (56, 58) zusammenwirken, um sowohl eine Rotation des äußeren Axialringes (42) gegenüber dem inneren Axialring (46) zu verhindern als auch die Aussparungen (56, 58) derart du deformieren, daß eine Kraft entgegen der relativen Axialbewegung zwischen dem inneren (46) und dem äußeren Axialring (42) ausgeübt wird, die gleich oder kleiner ist als eine vorbestimmte axiale Grenze, um die durch die Radiallageranordnung (48, 50) aufgrund der axialen Belastung des zusammengesetzten Lagers (18) bewirkte Rotationsreibung auf einen Wert unnerhalb einer vorbestimmten radialen Grenze zu begrenzen.

2. Plattenantrieb nach Anspruch 1, dadurch gekennzeichnet, daß der innere Axialring (46) und der äußere Axialring (42) Anschläge aufweisen, die mit den dazwischenliegenden Kugeln (44) begrenzend zusammenwirken, um die Axialbewegung zwischen dem inneren Axialring (46) und dem äußeren Axialring (42) auf einen ersten vorbestimmten Wert der relativen Axialbewegung in einer ersten Richtung und auf einen zweiten vorbestimmten Wert der Axialbewegung in einer zweiten Richtung entgegengesetzt zur ersten Richtung zu begrenzen; und
daß mindestens einer der Anschläge aus einer Endwand (68) in mindestens einer der V-förmigen, sich axial erstreckenden Aussparungen (56, 58, 56') besteht.

3. Plattenantrieb nach Anspruch 1 oder 2, dadurch gekennzeichnet, daß der äußere Axialring (42) und der innere Radialring (50) eine integrale Einheit bilden.

4. Plattenantrieb nach Anspruch 1 oder 2, dadurch gekennzeichnet, daß der innere Axialring (46) und der äußere Radialring (48) eine integrale Einheit bilden.

**Revendications**

1. Unité à disques comportant un axe rotatif (20) porté par un palier (18) permettant à la fois la rotation de l'axe (20) et le mouvement axial de celui-ci, unité caractérisée en ce que l'axe (20) est l'axe d'un actionneur de rotation (10) positionnant les têtes au-dessus des disques rotatifs, le palier (18) est un palier composé formé d'un palier axial (42, 44, 46) et d'un palier radial (48, 50) coopérant respectivement, le palier radial comprenant un ensemble d'éléments de palier entre un anneau radial extérieur (48) et un anneau radial intérieur (50) pour permettre la libre rotation de l'anneau radial extérieur (48) par rapport à l'anneau radial intérieur (50), le palier axial (42, 44, 46) comprenant un ensemble de billes (44) placé entre l'anneau intérieur (46) et l'anneau extérieur (42), l'anneau intérieur (46) comportant un ensemble de cavitées (58) s'étendant axialement et ayant une section en V sur la face située du côté de l'anneau extérieur (42), l'anneau extérieur (42) comportant un ensemble de cavités (56) s'étendant axialement et ayant une section en V dans la face tournée vers l'anneau intérieur (46), les cavités en V (56) qui s'étendent radialement dans l'anneau extérieur (42) coopérant avec chacune des cavités en V (58) s'étendant axialement sur l'anneau intérieur (46) pour maintenir au moins l'une des billes (44) dans l'intervalle et l'ensemble des billes (44) est formé de billes surdimension-nées coopérant avec les cavité (56, 58) pour éviter la rotation de l'anneau extérieur (42) par rapport à l'anneau intérieur (46) et déformer les cavités (56, 58) pour exercer une force antagoniste a celle provoquant le mouvement axial relatif de l'anneau intérieur (46) et de l'anneau extérieur (42) à un niveau inférieur ou égal à une limite axiale prédéterminée de manière à limiter le frottement de rotation appliqué au palier radial (48, 50) et qui est engendré par les contraintes axiales appliquées sur le palier composé (18) en-dessous d'une limite radiale prédéterminée.

2. Unité à disque selon la revendication 1, caractérisée en ce que l'anneau intérieur (46) et l'anneau extérieur (42) comportent des butées coopérant de manière à retenir les billes (44) entre elles pour limiter le mouvement axial entre l'anneau intérieur (46) et l'anneau extérieur (42) à une première limite prédéterminée de course axiale dans la première direction ainsi qu'une second limite prédéterminée de course axiale dans une seconde direction opposée à la première direction, au moins l'une des butées comportant une paroi d'extrémité (48) dans au moins l'une des cavités (56, 58, 56') s'étendant axialement et ayant une section en V.

3. Unité à disque selon la revendication 1 ou la revendication 2, caractérisée en ce que l'anneau extérieur (42) fait corps avec l'anneau intérieur (50).

4. Unité à disque selon la revendication 1 ou la revendication 2, caractérisée en ce que l'anneau intérieur (46) fait corps avec l'anneau extérieur (48).

FIG.1

FIG.2

FIG.3

20

44

48

46

50

42

18

FIG.4

44

48

44

44

42

20

46

44

50

44

50

52 46

14 42 48

44 54 20

FIG.5

42

56¹

68

FIG.8

FIG.6

FIG.7

4